# EUROPEAN PATENT APPLICATION

(11) **EP 4 624 153 A1**
(43) Date of publication of application: **01.10.2025**
(21) Application number: 23914872.9
(22) Date of filing: 02.03.2023
(51) Int. Cl.: B32B 27/32, B32B 27/08, B65D 65/40, B32B 27/18, B32B 37/15

(54) **MULTILAYER STRETCH FILM**

(30) Priority: 02.01.2023 KR 20230000299; 02.01.2023 KR 20230000300; 02.01.2023 KR 20230000301
(71) Applicant: LG Electronics Inc., Yeongdeungpo-gu Seoul 07336 (KR)
(72) Inventor: LEE, Sangyong, Seoul 08592 (KR); LEE, Dongwon, Seoul 08592 (KR)
(74) Representative: Vossius & Partner Patentanwälte Rechtsanwälte mbB
(86) International application number: PCT/KR2023/002858
(87) International publication number: WO 2024/147407

(57) **Abstract**

The present application relates to a multilayer stretch film comprising: a first layer and a second layer which are manufactured from low-density polyethylene (LDPE); and a core layer which is manufactured from a polyolefin elastomer (POE) and disposed between the first layer and the second layer.

## Description

### [Technical Field]

The present disclosure relates to a stretch film composed of multiple layers.

### [Background]

Conventionally, products were typically packaged using boxes. The packaging using the box has advantages such as easy repackaging and protection of the product from an external impact after the packaging. However, the packaging using the box has a disadvantage of making it difficult to externally check whether the product is damaged after the packaging. In addition, the box packaging has disadvantages such as a great volume, heaviness, and generation of a large amount of waste after delivery.

In addition to the above-mentioned box packaging, the existing packaging methods include a method of packaging the product using a film. The above-mentioned packaging method, also known as a visible packaging method, is a method of packaging the product using a stretch film or a stretch hood film.

The method of packaging the product using the transparent or translucent stretch film or stretch hood film has advantages of being able to check whether the product in the packaged state is damaged, having a small volume of a removed packaging material, and having relatively low carbon emissions during disposal.

Main design factors for the above-described packaging using the film are a tensile strength, an elongation rate, a tearing strength, and a manufacture time of the film.

### [Summary]

### [Technical Problem]

The present disclosure is to provide a multilayer stretch film that enables external checking on whether a packaged product is damaged.

In addition, the present disclosure is to provide a multilayer stretch film that has excellent tensile strength in a longitudinal direction and tensile strength in a width direction of the film.

In addition, the present disclosure is to provide a multilayer stretch film that has excellent elongation rate in a longitudinal direction and elongation rate in a width direction of the film.

In addition, the present disclosure is to provide a multilayer stretch film that may shorten a time it takes for multiple layers constituting the film to be fixed.

In addition, the present disclosure is to provide a multilayer stretch film that has excellent permeability.

### [Technical Solutions]

The present disclosure provides a multilayer stretch film including a first layer and a second layer made of low density polyethylene (LDPE), and a core layer made of polyolefin elastomer (POE) and positioned between the first layer and the second layer.

The core layer may be 100% made of polyolefin elastomer (POE) having a density of 0.85 to 0.910g/cm³.

A weight ratio of the first layer, the core layer, and the second layer may be set to 1:3:1.

A thickness ratio of the first layer, the core layer, and the second layer may be set to 1:2:1.

Each of the first layer and the second layer may be 100% made of low density polyethylene (LDPE) having a density of 0.910 to 0.920g/cm³.

The first layer may be made of a mixture of metallocene linear low density polyethylene (mLLDPE) having a density of 0.910 to 0.920g/cm³; low density polyethylene (LDPE) having a density of 0.910 to 0.920g/cm³; and polyolefin elastomer (POE) having a density of 0.85 to 0.910g/cm³.

A weight of the metallocene linear low density polyethylene (mLLDPE) may be set to 40 to 50% of a weight of the first layer, a weight of the low density polyethylene (LDPE) may be set to 10 to 30% of the weight of the first layer, and a weight of the polyolefin elastomer (POE) may be set to 10 to 30% of the weight of the first layer.

The second layer may be made of a mixture of metallocene linear low density polyethylene (mLLDPE) having a density of 0.910 to 0.920g/cm³; low density polyethylene (LDPE) having a density of 0.910 to 0.920g/cm³; and polyolefin elastomer (POE) having a density of 0.85 to 0.910g/cm³.

A weight of the metallocene linear low density polyethylene (mLLDPE) may be set to 40 to 50% of a weight of the second layer, a weight of the low density polyethylene (LDPE) may be set to 10 to 30% of the weight of the second layer, and a weight of the polyolefin elastomer (POE) may be set to 10 to 30% of the weight of the second layer.

Each of the first layer and the second layer may be made of a mixture of erucamide having a weight corresponding to 2 to 4% of a weight of each layer and low density polyethylene (LDPE).

A concentration of the erucamide may be set to 300 to 600ppm.

The multilayer stretch film may further include layer through-holes extending through the first layer, the core layer, and the second layer.

The layer through-holes may be defined as multiple holes defined along a width direction of the film or a longitudinal direction of the film.

In addition, the present disclosure provides a multilayer stretch film including a first layer and a second layer; and a core layer made of polyolefin elastomer (POE) and positioned between the first layer and the second layer, wherein each of the first layer and the second layer is made of a mixture of low density polyethylene (LDPE) and erucamide having a weight corresponding to 2 to 4% of a weight of each layer.

A concentration of the erucamide may be set to 300 to 600ppm.

The core layer may be 100% made of polyolefin elastomer (POE) having a density of 0.85 to 0.910g/cm³.

The first layer may be made of a mixture of metallocene linear low density polyethylene (mLLDPE) having a density of 0.910 to 0.920g/cm³; low density polyethylene (LDPE) having a density of 0.910 to 0.920g/cm³; and polyolefin elastomer (POE) having a density of 0.85 to 0.910g/cm³.

A weight of the metallocene linear low density polyethylene (mLLDPE) may be set to 40 to 50% of a weight of the first layer, a weight of the low density polyethylene (LDPE) may be set to 10 to 30% of the weight of the first layer, and a weight of the polyolefin elastomer (POE) may be set to 10 to 30% of the weight of the first layer.

The second layer may be made of a mixture of metallocene linear low density polyethylene (mLLDPE) having a density of 0.910 to 0.920g/cm³; low density polyethylene (LDPE) having a density of 0.910 to 0.920g/cm³; and polyolefin elastomer (POE) having a density of 0.85 to 0.910g/cm³.

A weight of the metallocene linear low density polyethylene (mLLDPE) may be set to 40 to 50% of a weight of the second layer, a weight of the low density polyethylene (LDPE) may be set to 10 to 30% of the weight of the second layer, and a weight of the polyolefin elastomer (POE) may be set to 10 to 30% of the weight of the second layer.

A weight ratio of the first layer, the core layer, and the second layer may be set to 1:3:1.

A thickness ratio of the first layer, the core layer, and the second layer may be set to 1:2:1.

In addition, the present disclosure provides a multilayer stretch film including a first layer and a second layer made of low-density polyethylene (LDPE); a core layer made of polyolefin elastomer (POE) and positioned between the first layer and the second layer; and layer through-holes extending through the first layer, the core layer, and the second layer.

The layer through-holes may be defined as multiple holes defined along a width direction of the film or a longitudinal direction of the film.

The core layer may be 100% made of polyolefin elastomer (POE) having a density of 0.85 to 0.910g/cm³.

A weight ratio of the first layer, the core layer, and the second layer may be set to 1:3:1.

A thickness ratio of the first layer, the core layer, and the second layer may be set to 1:2:1.

Each of the first layer and the second layer is 100% made of low density polyethylene (LDPE) having a density of 0.910 to 0.920g/cm³.

The first layer may be made of a mixture of metallocene linear low density polyethylene (mLLDPE) having a density of 0.910 to 0.920g/cm³; low density polyethylene (LDPE) having a density of 0.910 to 0.920g/cm³; polyolefin elastomer (POE) having a density of 0.85 to 0.910g/cm³; and erucamide having a concentration of 300 to 600ppm.

A weight of the metallocene linear low density polyethylene (mLLDPE) may be set to 40 to 50% of a weight of the first layer, a weight of the low density polyethylene (LDPE) may be set to 10 to 30% of the weight of the first layer, a weight of the polyolefin elastomer (POE) may be set to 10 to 30% of the weight of the first layer, and a weight of the erucamide may be set to 2 to 4% of the weight of the first layer.

The second layer may be made of a mixture of metallocene linear low density polyethylene (mLLDPE) having a density of 0.910 to 0.920g/cm³; low density polyethylene (LDPE) having a density of 0.910 to 0.920g/cm³; polyolefin elastomer (POE) having a density of 0.85 to 0.910g/cm³; and erucamide having a concentration of 300 to 600ppm.

A weight of the metallocene linear low density polyethylene (mLLDPE) may be set to 40 to 50% of a weight of the second layer, a weight of the low density polyethylene (LDPE) may be set to 10 to 30% of the weight of the second layer, a weight of the polyolefin elastomer (POE) may be set to 10 to 30% of the weight of the second layer, and a weight of the erucamide may be set to 2 to 4% of the weight of the second layer.

### [Advantageous Effects]

The present disclosure provides the multilayer stretch film that enables the external checking on whether the packaged product is damaged.

In addition, the present disclosure provides the multilayer stretch film that has the excellent tensile strength in the longitudinal direction and tensile strength in the width direction of the film.

In addition, the present disclosure provides the multilayer stretch film that has the excellent elongation rate in the longitudinal direction and elongation rate in the width direction of the film.

In addition, the present disclosure provides the multilayer stretch film that may shorten the time it takes for the multiple layers constituting the film to be fixed.

In addition, the present disclosure provides the multilayer stretch film that has the excellent permeability.

### [Brief Description of the Drawings]

FIGS 1 and 2 illustrate a process of packaging a product with a stretch film and an example of a packaged product.
FIG. 3 illustrates an example of a multilayer stretch film.
FIG. 4 is a table comparing characteristics of an existing film and a multilayer stretch film of the present disclosure with each other.
FIGS. 5 and 6 illustrate an example of a multilayer stretch film having layer through-holes defined therein.

### [Best Mode]

Hereinafter, a preferred embodiment of a multilayer stretch film will be described in detail with reference to the attached drawings.

Methods of packaging a product with a stretch film include packaging in which a stretch hood film is applied from a top to a bottom of the product, wrapping in which some or all surfaces of the product are wrapped with the stretch film, and shrink wrapping in which heat is applied while wrapping the product with the stretch film to adjust a shrinkage rate of the film.

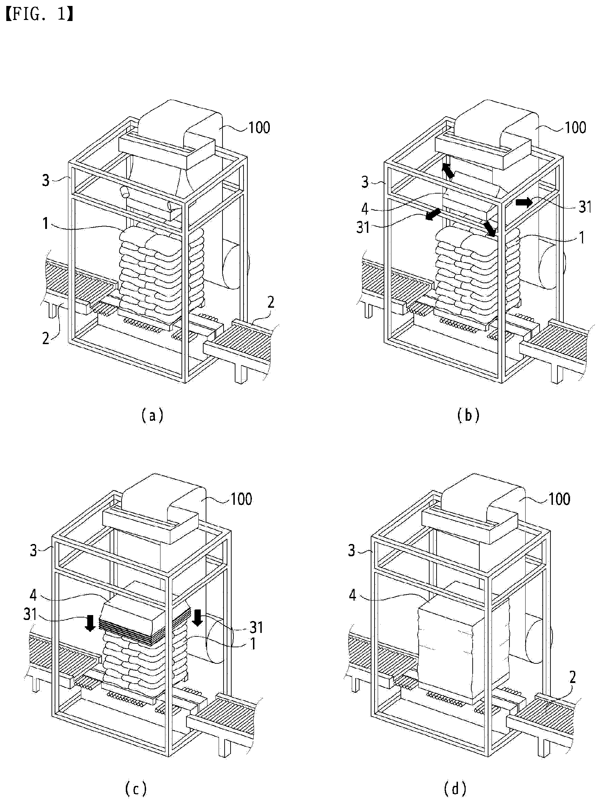

FIG. 1 illustrates a process of packaging a product with a stretch hood film, which is a type of multilayer stretch films.

As illustrated in (a) in FIG. 1, when a product 1 moves along a conveyor 2 to a packaging apparatus 3, the packaging apparatus 3 calculates a required amount of film 100. As illustrated in (b) in FIG. 1, the packaging apparatus 3 cuts the required amount of film 100 and simultaneously bonds cut surfaces together. The film 100 with the cut surfaces bonded becomes a hood-shaped film 4 with a closed top surface.

As shown in (c) in FIG. 1, arms 31 disposed in the packaging apparatus 3 pull edges of the hood-shaped film 4 to expand a diameter of the film and then covers the product 1 with the hood-shaped film 4 from top to bottom. As shown in (d) in FIG. 1, when the arms 31 are removed, the hood-shaped film 4 shrinks to protect a shape and an outer appearance of the product 1.

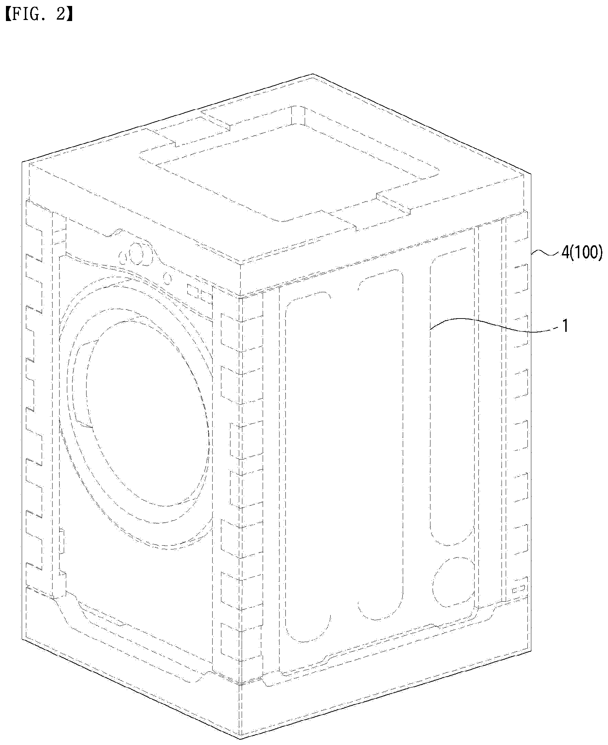

As shown in FIG. 2, when the product 1 is packaged with the film 100 made of a transparent material or a translucent material, it will be able to check whether the product 1 is damaged without removing the package.

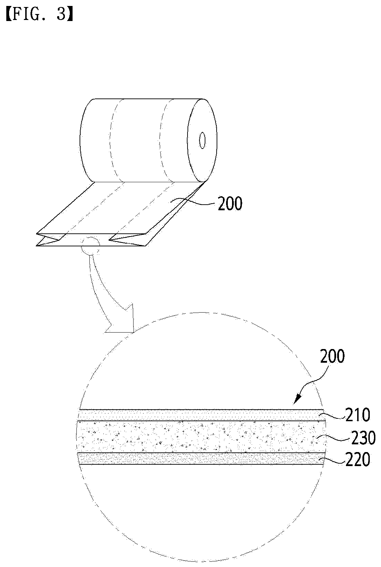

FIG. 3 illustrates an example of the stretch film used in the above-described packaging, and the stretch film in FIG. 3 is a multilayer stretch film 200 in which multiple layers are coupled to each other to form a single film.

The multilayer stretch film 200 may include a first layer 210 made of low density polyethylene (LDPE), a second layer 220 made of low density polyethylene (LDPE), and a core layer 230 made of polyolefin elastomer (POE) and positioned between the first layer 210 and the second layer 220.

Among the existing multilayer stretch films, there is one composed of a first layer and a second layer made of low density polyethylene, and a core layer made of ethylene vinyl acetate (EVA) and located between the first layer and the second layer.

It was confirmed that, compared to the multilayer stretch film in which the core layer is made of ethylene vinyl acetate (EVA), the multilayer stretch film 200 in which the core layer 230 is made of polyolefin elastomer (POE) is superior in terms of a tensile strength in longitudinal and width directions of the film, an elongation rate in the longitudinal and width directions of the film, and the like.

The core layer 230 may be 100% made of polyolefin elastomer (POE) having a density of 0.85 to 0.910g/cm³, and each of the first layer 210 and the second layer 220 may be 100% made of low density polyethylene (LDPE) having a density of 0.910 to 0.920g/cm³.

Unlike the above, the core layer 230 may be 100% made of polyolefin elastomer (POE) having a density of 0.85 to 0.910g/cm³, the first layer 210 may be made of a mixture of metallocene linear low density polyethylene (mLLDPE) having a density of 0.910 to 0.920g/cm³, low density polyethylene (LDPE) having a density of 0.910 to 0.920g/cm³, and polyolefin elastomer (POE) having a density of 0.85 to 0.910g/cm³, and the second layer 220 may be made of a mixture of metallocene linear low density polyethylene (mLLDPE) having a density of 0.910 to 0.920g/cm³, low density polyethylene (LDPE) having a density of 0.910 to 0.920g/cm³, and polyolefin elastomer (POE) having a density of 0.85 to 0.910g/cm³.

In manufacturing the first layer 210, a weight of the metallocene linear low density polyethylene (mLLDPE) may be set to 40 to 50% of a weight of the first layer, a weight of the low density polyethylene (LDPE) may be set to 10 to 30% of the weight of the first layer, and a weight of the polyolefin elastomer (POE) may be set to 10 to 30% of the weight of the first layer.

In manufacturing the second layer 220, a weight of the metallocene linear low density polyethylene (mLLDPE) may be set to 40 to 50% of a weight of the second layer, a weight of the low density polyethylene (LDPE) may be set to 10 to 30% of the weight of the second layer, and a weight of the polyolefin elastomer (POE) may be set to 10 to 30% of the weight of the second layer.

In one example, to shorten a time for the first layer 210, the core layer 230, and the second layer 220 to be coupled together to form one multilayer stretch film 200 (shorten a fixation time of the layers), an additive may be added to the multilayer stretch film 200.

That is, the first layer 210 may be made of a mixture of the low density polyethylene (LDPE) and erucamide (Cas No. 112-84-5), and the second layer 220 may be made of a mixture of the low density polyethylene (LDPE) and erucamide.

An amount of erucamide added to the first layer 210 may be set to 2 to 4% of the weight of the first layer, and an amount of erucamide added to the second layer 220 may be set to 2 to 4% of the weight of the second layer. In addition, it is preferable that each of a concentration of erucamide used in the first layer 210 and a concentration of erucamide used in the second layer 220 is set to 300 to 600ppm.

That is, the first layer 210 may be made of a mixture of metallocene linear low density polyethylene (mLLDPE) having the density of 0.910 to 0.920g/cm³, low density polyethylene (LDPE) having the density of 0.910 to 0.920g/cm³, polyolefin elastomer (POE) having the density of 0.85 to 0.910g/cm³, and erucamide having the concentration of 300 to 600ppm. In this case, the weight of the metallocene linear low density polyethylene (mLLDPE) may be set to 40 to 50% of the weight of the first layer, the weight of the low density polyethylene (LDPE) may be set to 10 to 30% of the weight of the first layer, the weight of the polyolefin elastomer (POE) may be set to 10 to 30% of the weight of the first layer, and a weight of the erucamide may be set to 2 to 4% of the weight of the first layer.

The second layer 220 may be made of a mixture of metallocene linear low density polyethylene (mLLDPE) having the density of 0.910 to 0.920g/cm³, low density polyethylene (LDPE) having the density of 0.910 to 0.920g/cm³, polyolefin elastomer (POE) having the density of 0.85 to 0.910g/cm³, and erucamide having the concentration of 300 to 600ppm. In this case, a weight of the metallocene linear low density polyethylene (mLLDPE) may be set to 40 to 50% of the weight of the second layer, a weight of the low density polyethylene (LDPE) may be set to 10 to 30% of the weight of the second layer, a weight of the polyolefin elastomer (POE) may be set to 10 to 30% of the weight of the second layer, and a weight of the erucamide may be set to 2 to 4% of the weight of the second layer.

When the erucamide is used in the manufacturing of the first layer 210 and the second layer 220, not only the fixation time of the layers 210, 220, and 230 may be shortened, but also a film surface may be smoothed and have excellent gloss.

Furthermore, it was confirmed that it is advantageous in terms of the tensile strength, the elongation rate, and the tearing strength when a weight ratio of the first layer 210, the core layer 230, and the second layer 220 is set to 1:3:1. In addition, it was confirmed that it is advantageous in terms of the tensile strength, the elongation rate, and the tearing strength when a thickness ratio of the first layer 210, the core layer 230, and the second layer 220 is set to 1:2:1.

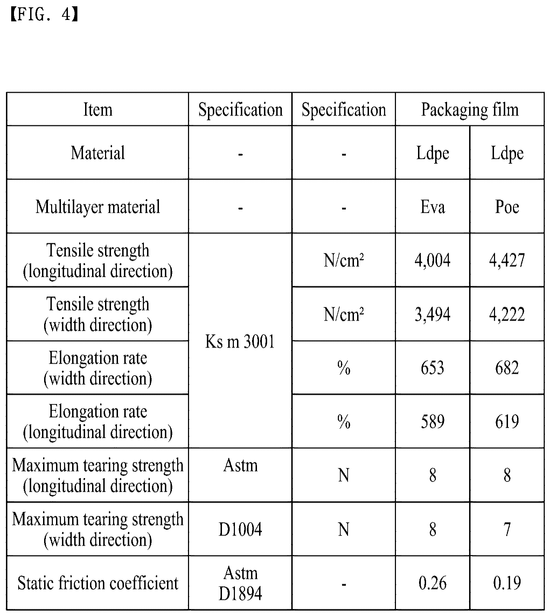

FIG. 4 is a table comparing characteristics of the multilayer stretch film 200 in which the core layer 230 is made of polyolefin elastomer (POE) and the multilayer stretch film in which the core layer is made of ethylene vinyl acetate (EVA) with each other.

It was confirmed that the multilayer stretch film 200 in which the core layer 230 is made of polyolefin elastomer (POE) is superior to the existing multilayer stretch film in terms of the tensile strength in the longitudinal direction of the film, the tensile strength in the width direction of the film, the elongation rate in the longitudinal direction of the film, and the elongation rate in the width direction of the film, but has almost the same tearing strength.

In one example, the multilayer stretch film 200 in which the core layer is made of polyolefin elastomer has a lower static friction coefficient than the existing multilayer stretch film. Because the lower static friction coefficient is advantageous for packaging the product, the multilayer stretch film 200 in which the core layer 230 is made of polyolefin elastomer is advantageous in packaging the product compared to the existing multilayer stretch film.

When packaging the product with the multilayer stretch film 200 having the structure described above, a problem may occur in which air condenses inside the product, damaging the product. To solve this problem, the multilayer stretch film 200 may further have multiple layer through-holes 240.

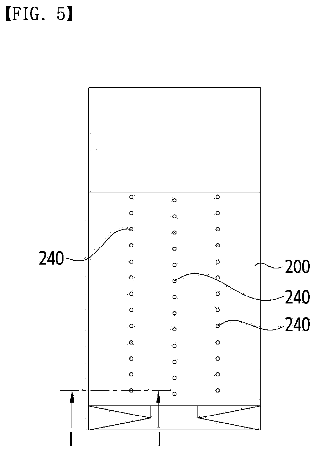

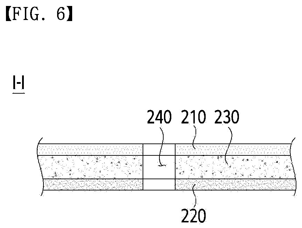

As shown in FIGS. 5 and 6, the layer through-holes 240 should be defined so as to extend through the first layer 210, the core layer 230, and the second layer 220, and the layer through-holes 240 may be defined as multiple holes spaced apart from each other along the width direction of the multilayer stretch film 200 or the longitudinal direction of the multilayer stretch film 200.

A spacing between the layer through-holes 240 (a spacing in the width direction of the film or a spacing in the longitudinal direction of the film) may be variously set. For example, the spacing between the through-holes 240 in the width direction of the multilayer stretch film may be set to 150mm, and the spacing between the through-holes 240 in the longitudinal direction of the multilayer stretch film may be set to 35 to 40mm.

Because the multilayer stretch film described above is an example of the present disclosure, the scope of the rights of the present disclosure cannot be limited to the structure and control method described above.

## Claims

1. A multilayer stretch film comprising:
a first layer and a second layer made of low density polyethylene (LDPE); and
a core layer made of polyolefin elastomer (POE) and positioned between the first layer and the second layer.

2. The multilayer stretch film of claim 1, wherein the core layer is 100% made of polyolefin elastomer (POE) having a density of 0.85 to 0.910g/cm³.

3. The multilayer stretch film of claim 2, wherein a weight ratio of the first layer, the core layer, and the second layer is set to 1:3:1.

4. The multilayer stretch film of claim 2, wherein a thickness ratio of the first layer, the core layer, and the second layer is set to 1:2:1.

5. The multilayer stretch film of claim 2, wherein each of the first layer and the second layer is 100% made of low density polyethylene (LDPE) having a density of 0.910 to 0.920g/cm³.

6. The multilayer stretch film of claim 2, wherein the first layer is made of a mixture of metallocene linear low density polyethylene (mLLDPE) having a density of 0.910 to 0.920g/cm³; low density polyethylene (LDPE) having a density of 0.910 to 0.920g/cm³; and polyolefin elastomer (POE) having a density of 0.85 to 0.910g/cm³.

7. The multilayer stretch film of claim 6, wherein a weight of the metallocene linear low density polyethylene (mLLDPE) is set to 40 to 50% of a weight of the first layer,
wherein a weight of the low density polyethylene (LDPE) is set to 10 to 30% of the weight of the first layer,
wherein a weight of the polyolefin elastomer (POE) is set to 10 to 30% of the weight of the first layer.

8. The multilayer stretch film of claim 2, wherein the second layer is made of a mixture of metallocene linear low density polyethylene (mLLDPE) having a density of 0.910 to 0.920g/cm³; low density polyethylene (LDPE) having a density of 0.910 to 0.920g/cm³; and polyolefin elastomer (POE) having a density of 0.85 to 0.910g/cm³.

9. The multilayer stretch film of claim 8, wherein a weight of the metallocene linear low density polyethylene (mLLDPE) is set to 40 to 50% of a weight of the second layer,
wherein a weight of the low density polyethylene (LDPE) is set to 10 to 30% of the weight of the second layer,
wherein a weight of the polyolefin elastomer (POE) is set to 10 to 30% of the weight of the second layer.

10. The multilayer stretch film of claim 1, wherein each of the first layer and the second layer is made of a mixture of erucamide having a weight corresponding to 2 to 4% of a weight of each layer and low density polyethylene (LDPE).

11. The multilayer stretch film of claim 10, wherein a concentration of the erucamide is set to 300 to 600ppm.

12. The multilayer stretch film of claim 1, further comprising layer through-holes extending through the first layer, the core layer, and the second layer.

13. The multilayer stretch film of claim 12, wherein the layer through-holes are defined as multiple holes defined along a width direction of the film or a longitudinal direction of the film.
